# EUROPÄISCHE PATENTANMELDUNG

(11) **EP 2 398 068 A1**
(43) Veröffentlichungstag der Anmeldung: **21.12.2011**
(21) Anmeldenummer: 10006184.5
(22) Anmeldetag: 15.06.2010
(51) Int. Cl.: H01L 31/048

(54) **Anschlußdose für ein Photovoltaikmodul**

(71) Anmelder: Rauschert Solar GmbH, 96515 Judenbach (DE)
(72) Erfinder: Klett, Axel, 98673 Eisfeld (DE)
(74) Vertreter: Ingerl, Reinhard E.

(57) **Zusammenfassung**

Die vorliegende Erfindung stellt eine Anschlußdose für ein Photovoltaik-Modul zur Verbindung der Stromleiter des Photovoltaik-Moduls mit einem Kabelsatz zu Verfügung, welche ein Gehäuse aufweist, in welches die Stromleiter des Photovoltaik-moduls einführbar sind und aus welchem der Kabelsatz herausführbar ist. Dabei ist vorgesehen, daß das Gehäuse aus Keramik gefertigt ist, insbesondere aus Silikat-Keramik, insbesondere aus den Materialien C110, C120, C130, C 220, C221, C 410, C 610, C 780.

## Beschreibung

Die vorliegende Erfindung betrifft eine Anschlußdose für ein Photovoltaikmodul zur Verbindung der Stromleiter des Photovoltaikmoduls mit einem Kabelsatz, wobei die Anschlußdose ein Gehäuse aufweist, in welches die Stromleiter des Photovoltaikmoduls einführbar sind und aus welchem der Kabelsatz herausführbar ist.

Der in einem Photovoltaikmodul erzeugte Strom wird üblicherweise durch mehrere Metalleiter, welche direkt mit dem Waver des Photovoltaikmoduls in Verbindung stehen, aus dem Modul geführt. Diese Stromleiter werden in der Anschlußdose aufgenommen und mit den weiterführenden Kabeln verbunden. Hierfür wird üblicherweise auf der Rückseite jedes Photovoltaikmoduls eine Anschlußdose aufgebracht, üblicherweise durch eine Verklebung.

Im Stand der Technik werden üblicherweise Anschlußdosen mit einem Gehäuse aus Kunststoff eingesetzt. Dies führt zu folgenden Problemen:
● Im Betrieb kann sich die Dose auf bis zu 90°C erwärmen. Dies führt zu einer punktuellen Erhitzung des mit ihr verbundenen Moduls (Hot Spot). Hierdurch wird die Leistungsfähigkeit des Moduls reduziert und die Degradation beschleunigt. Im Extremfall können sich in Folge der Überhitzung der Anschlußdose die Kunststoffkomponenten der Anschlußdose oder des Moduls entzünden.
● Weiterhin ist die Anschlußdose über die gesamte Betriebszeit von 20 bis 25 Jahren anspruchsvollen Umweltbedingungen ausgesetzt. Werden keine äußerst hochwertigen und damit teuren Kunststoffe verwendet, so wird das Material brüchig, was zu Fehlfunktionen führen kann.

Aufgabe der vorliegenden Erfindung ist es daher, eine verbesserte Anschlußdose für Photovoltaikmodule zur Verfügung zu stellen, welche bei vertretbaren Herstellungskosten einen sicheren Langzeitbetrieb gewährleistet.

Diese Aufgabe wird erfindungsgemäß durch eine Anschlußdose gemäß Anspruch 1 gelöst. Die Erfindung stellt dabei eine Anschlußdose für ein Photovoltaikmodul zur Verbindung der Stromleiter des Photovoltaikmoduls mit einem Kabelsatz zur Verfügung, welche ein Gehäuse aufweist, in welches die Stromleiter des Photovoltaikmoduls einführbar sind und aus welchem der Kabelsatz herausführbar ist. Erfindungsgemäß ist dabei vorgesehen, daß das Gehäuse aus Keramik gefertigt ist. Keramik weist eine hohe Hitzebeständigkeit sowie gute Isolationseigenschaften auf, so daß sich erhebliche Vorteile gegenüber Kunststoffgehäusen ergeben. Weiterhin ist Keramik äußerst langlebig und kann auch bei anspruchsvollsten Umweltbedingungen im Außenbereich über die geforderte Betriebszeit der Photovoltaikmodule von 20 bis 25 Jahren ohne Qualitätsverlust eingesetzt werden. Zudem kann das Gehäuse aus Keramik in hoher Qualität kostengünstig hergestellt werden.

Insbesondere wird als Material für das Gehäuse eine dichte Silikat-Keramik eingesetzt. Solche Keramiken haben sich seit langem für Anwendungen im Außenbereich, insbesondere für Anwendungen bei der Stromverteilung, bewährt. Als Materialien können dabei insbesondere Silikat-Keramiken vom Typ C 110, C 120, C 130, C 220, C 221, C 410, C 610 oder C 780 zum Einsatz kommen.

Vorteilhafterweise weist das Gehäuse der erfindungsgemäßen Anschlußdose auf seiner Unterseite Öffnungen auf, durch welche die Stromleiter des Photovoltaikmoduls in die Anschlußdose einführbar sind. Wird das Gehäuse auf dem Photovoltaikmodul, insbesondere auf der Rückseite des Photovoltaikmoduls, angeordnet, so sind die Stromleiter vom Waver des Photovoltaikmoduls durch die Öffnung auf der Unterseite des Gehäuses in dieses einführbar, wo sie mit dem Kabelsatz verbindbar sind.

Vorteilhafterweise sind die Öffnungen von Klebebereichen umgeben, mittels welchen das Gehäuse dicht auf das Photovoltaikmodul aufklebbar ist. Die dichte Verbindung zwischen Photovoltaikmodul und Anschlußdose wird daher durch ein Verkleben der Anschlußdose auf der Rückseite des Photovoltaikmoduls ermöglicht.

Weiterhin kann das erfindungsgemäße Gehäuse auf seiner Unterseite Abstandsstege aufweisen, mit welchen es auf dem Photovoltaikmodul verklebt wird, um eine Luftzirkulation zwischen dem Photovoltaikmodul und der Unterseite des Gehäuses zu ermöglichen. Im Vergleich zu der im Stand der Technik vorgesehenen vollflächigen Verklebung des Gehäuses hat dies den erheblichen Vorteil, daß das Photovoltaikmodul weniger stark erwärmt wird. Hierdurch kann die Hot Spot-Problematik weitgehend vermieden werden. Die Unterseite des Gehäuses wirkt dabei gleichzeitig als Kühlfläche für die innerhalb des Gehäuses angeordneten Komponenten. Weiterhin wird die Kontaktfläche mit dem Photovoltaikmodul minimiert.

Vorteilhafterweise sind dabei auf der Unterseite des Gehäuses mehrere Abstandsstegbereiche vorgesehen, welche auf einem ansonsten zurückliegenden Bodenbereich angeordnet sind. Hierdurch wird eine sichere Montage bei gleichzeitig hervorragender Luftzirkulation ermöglicht. Die vorliegende Erfindung macht sich dabei insbesondere zunutzen, daß Photovoltaikmodule üblicherweise in schräger Position montiert werden. Hierdurch ergibt sich unterhalb des Keramikgehäuses ein Kamineffekt, durch welchen die Luftzirkulation zwischen dem Photovoltaikmodul und der Unterseite des Gehäuses verbessert wird. Vorteilhafterweise ist hierzu zwischen den Abstandsstegbereichen zumindest in einer Richtung ein durchgehender zurückgesetzter Bereich vorgesehen. Vorteilhafterweise wird die Anschlußdose dabei so an das Photovoltaikmodul montiert, daß der durchgehende zurückgesetzte Bereich entlang der Schräge ausgerichtet ist.

Im inneren der erfindungsgemäßen Anschlußdose können Bypass-Dioden anordenbar sein. Neben der Funktion der Sammlung und Übergabe der Kontakte von modulinternen Leitungen zu externen Kabeln können die Anschlußdosen für Photovoltaikmodule so mittels der Bypass-Dioden den Strom steuern. Dabei werden Zellenreihen eines Moduls mit Bypass-Dioden überbrückt, um die Funktion des Moduls bei Teilbeschattung zu erhalten. Bei längerer Beschattung einer Solarzelle "verstopft" diese, während die anderen Zellen weiterhin versuchen, ihren Nennstrom durch die Solarzelle hindurchzuführen. Dabei kann es vorkommen, daß die verstopfte Zelle ihre Sperrspannung der treibenden Spannung der anderen Zellen entgegenstellt. Hierdurch kann es zur Überhitzung mit fatalen Folgen für das Modul kommen. Durch die in der Anschlußdose angeordneten Bypass-Dioden kann die verschattete Zelle, die verschattete Zellenreihe oder das verschattete Modul überbrückt werden, so daß diese vor Überhitzung geschützt werden. Die Bypass-Dioden nehmen dabei die entsprechenden Zellen aus dem Betrieb. Weil sich die Dioden bei dieser Umleitung erwärmen, führt dies gleichzeitig zu einer Erwärmung der Anschlußdose.

Wie bereits eingangs erläutert, können die im Stand der Technik mit dieser Erwärmung der Dioden verbundenen Probleme durch den Einsatz der erfindungsgemäßen Anschlußdose mit einem Keramikgehäuse weitgehend vermieden werden. Weiterhin kann durch die ebenfalls oben beschriebene Vorverlagerung der Dose, durch welche die Auflagefläche möglichst klein gehalten wird, eine geringere Kontaktfläche erreicht werden, was ebenfalls zu einer niedrigeren Erwärmung des Photovoltaikmoduls führt. Hierdurch und durch die gute Wärmeisolation des Keramikmaterials wird eine Erwärmung des Wavers des Photovoltaikmoduls durch die Dioden weitgehend vermieden, so daß auch der Innenwiderstand des Wavers nicht erhöht wird. Hierdurch werden Leistungsverluste vermieden.

Vorteilhafterweise sind die Bypass-Dioden auf einer in dem Gehäuse angeordneten Leiterplatte angeordnet. Hierdurch wird die Herstellung der Anschlußdose erleichtert, da nur die Leiterplatte mitsamt den Bypass-Dioden in das Gehäuse eingesetzt werden muß.

Vorteilhafterweise ist auch der aus der Anschlußdose geführte Kabelsatz an der Leiterplatte angeschlossen. Zur Bereitstellung der Anschlußdose muß damit lediglich die Leiterplatte mit den Bypass-Dioden und dem bereits angeschlossenen Kabelsatz in dem Gehäuse angeordnet werden.

Weiterhin vorteilhafterweise sind die Stromleiter des Photovoltaikmoduls an die Leiterplatte anschließbar, beispielsweise durch eine Lotverbindung. Vorteilhafterweise erfolgt dies durch Einführen der Stromleiter des Photovoltaikmoduls durch Öffnungen im Gehäuse und Anschließen an die dort angeordnete Leiterplatte.

Weiterhin vorteilhafterweise sind im Inneren des Gehäuses Trennbereiche aus Keramik zwischen den Dioden vorgesehen. Diese Trennbereiche führen zu einer zusätzlichen Isolation der Dioden untereinander. Hierdurch wird verhindert, daß sich die Dioden gegenseitig erwärmen. Vorteilhafterweise sind die Trennbereiche rings um die jeweiligen Dioden angeordnet. Durch das Keramikmaterial des Gehäuses weisen auch die Trennbereiche hervorragende Isolationseigenschaften auf. Insbesondere können die Trennbereiche durch eine versenkte Anordnung der Dioden im Gehäuse oder durch Trennstege bereit gestellt werden.

Weiter kann vorgesehen sein, daß das Gehäuse einen Deckel umfaßt, welcher dichtend verschraubbar ist. Insbesondere kann dabei ein umlaufender Dichtbereich vorgesehen sein, durch welchen der Deckel dicht auf eine Öffnung des Gehäuses aufschraubbar ist. Die Verschraubung des Deckels ermöglicht es dabei, das Gehäuse z.B. zu Wartungszwecken auch wieder zu öffnen.

Vorteilhafterweise ermöglicht dabei der Deckel einen Zugang zu den Anschlußstellen für die Stromleiter des Photovoltaikmoduls. Insbesondere kann so die Anschlußdose bereits vormontiert auf dem Photovoltaikmodul aufgeklebt werden, und die in das Innere des Gehäuses eingeführten Stromleiter mit den Anschlußstellen verbunden werden. Daraufhin wird der Deckel dichtend mit dem restlichen Gehäuse verschraubt. Vorteilhafterweise sind dabei die Gewindestege für die Verschraubung in das Keramikmaterial eingearbeitet. Dies ermöglicht eine besonders kostengünstige und langlebige Verbindung.

Weiterhin kann vorgesehen sein, daß das Gehäuse ein unteres und ein oberes Gehäuseelement umfaßt, zwischen welchen der Kabelsatz aus der Dose geführt wird. Vorteilhafterweise ist dabei die Leiterplatte mit dem Kabelsatz zwischen den beiden Gehäuseelementen angeordnet und durch Verbinden der beiden Gehäuseelemente dichtend umschlossen. Zur Herstellung der Anschlußdose muß damit lediglich die Leiterplatte mit dem Kabelsatz in eines der Gehäuseelemente eingelegt werden und das andere Gehäuseelement mit diesem verbunden werden. Vorteilhafterweise ist dabei ein umlaufender Dichtbereich vorgesehen, durch welchen eine dichte Verbindung zwischen den beiden Gehäuseelementen ermöglicht wird. Vorteilhafterweise werden die beiden Gehäuseelemente miteinander verklebt.

Weiterhin vorteilhafterweise ist vorgesehen, daß der oben beschriebene Deckel an dem oberen Gehäuseelement angeordnet ist. Die erfindungsgemäße Anschlußdose kann so fertig mitsamt dem Kabelsatz und der in der Anschlußdose angeordneten Leiterplatte bereitgestellt werden und muß nur noch an dem Photovoltaikmodul montiert werden. Nach dem Anschluß der Stromleiter des Photovoltaikmoduls wird dann der Deckel geschlossen, so daß die Anschlußdose fertig montiert ist.

Die vorliegende Erfindung umfaßt weiterhin eine Anschlußdose, wie sie oben beschrieben wurde, mit einem Kabelsatz und/oder einer Leiterplatte und/oder Bypass-Dioden. Vorteilhafterweise bilden dabei die Anschlußdose mit einem oder mehreren dieser Elemente eine vormontierte Einheit.

Die vorliegende Erfindung umfaßt weiterhin ein Photovoltaikmodul mit einer Anschlußdose, wie sie oben beschrieben wurde. Vorteilhafterweise ist die Anschlußdose dabei auf der Rückseite des Photovoltaikmoduls aufgeklebt. Insbesondere kann die Anschlußdose dabei auf der Rückseite des Wavers aufgeklebt sein. Die Anschlußdose dient dabei wie oben dargestellt der Verbindung der Stromleiter des Photovoltaikmoduls mit einem Kabelsatz.

Die vorliegende Erfindung wird nun anhand eines Ausführungsbeispiels sowie Zeichnungen näher dargestellt.

Dabei zeigen:
- Fig. 1:: das Ausführungsbeispiel einer erfindungsgemäßen Anschlußdose in einer perspektivischen Ansicht von oben,
- Fig. 2:: das in Fig. 1 gezeigte Ausführungsbeispiel in einer perspektivischen Ansicht von unten,
- Fig. 3:: ein unteres Gehäuseelement der erfindungsgemäßen Anschlußdose in einer perspektivischen Ansicht von oben,
- Fig. 4:: eine Leiterplatte für eine erfindungsgemäße Anschlußdose in einer perspektivischen Ansicht von unten,
- Fig. 5:: ein oberes Gehäuseelement einer erfindungsgemäßen Anschlußdose in einer perspektivischen Ansicht von unten,

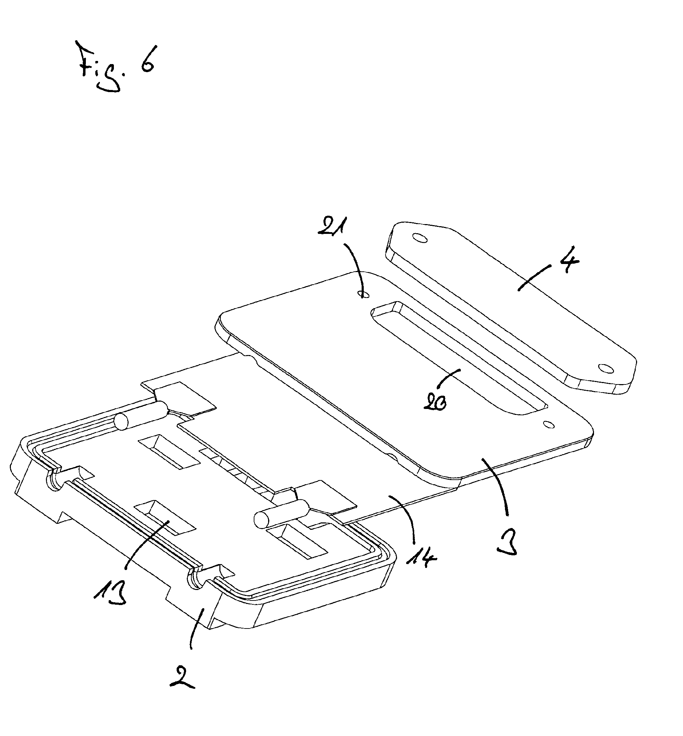

- Fig. 6:: die erfindungsgemäße Anschlußdose in einer Explosionsdarstellung von oben,
- Fig. 7:: die erfindungsgemäße Anschlußdose in einer Explosionsdarstellung von unten, und
- Fig. 8:: ein Ausführungsbeispiel eines erfindungsgemäßen Photovoltaikmoduls mit der erfindungsgemäßen Anschlußdose.

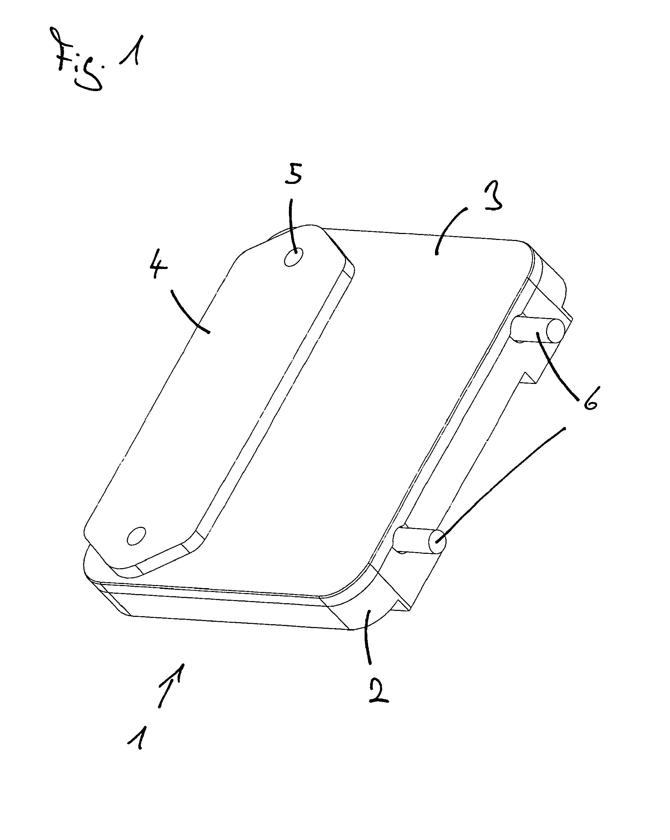

Fig. 1 zeigt ein Ausführungsbeispiel einer erfindungsgemäßen Anschlußdose für ein Photovoltaikmodul. Durch die Anschlußdose können die Stromleiter des Photovoltaikmoduls mit einem Kabelsatz 6 verbunden werden. Die Anschlußdose weist dabei ein Gehäuse 1 auf, in welches die Stromleiter des Photovoltaikmoduls einführbar sind und aus welchem der Kabelsatz 6 herausgeführt ist.

Erfindungsgemäß ist das Gehäuse aus Keramik gefertigt. Dabei kommt im Ausführungsbeispiel eine dichte Silikat-Keramik zum Einsatz, beispielsweise aus einem der Materialien C 110, C 120, C 130, C 220, C 221, C 410, C 610 oder C 780.

Wie auf Fig. 1 dargestellt, besteht das Gehäuse der erfindungsgemäßen Anschlußdose 1 aus einem unteren Gehäuseelement 2, mit welchem die Anschlußdose auf einem Photovoltaikmodul befestigt wird, einem oberen Gehäuseelement 3, sowie einem Deckel 4. Die Leitungen des Kabelsatzes 6 sind dabei zwischen dem unteren Gehäuseelement 2 und dem oberen Gehäuseelement 3 aus der Anschlußdose geführt.

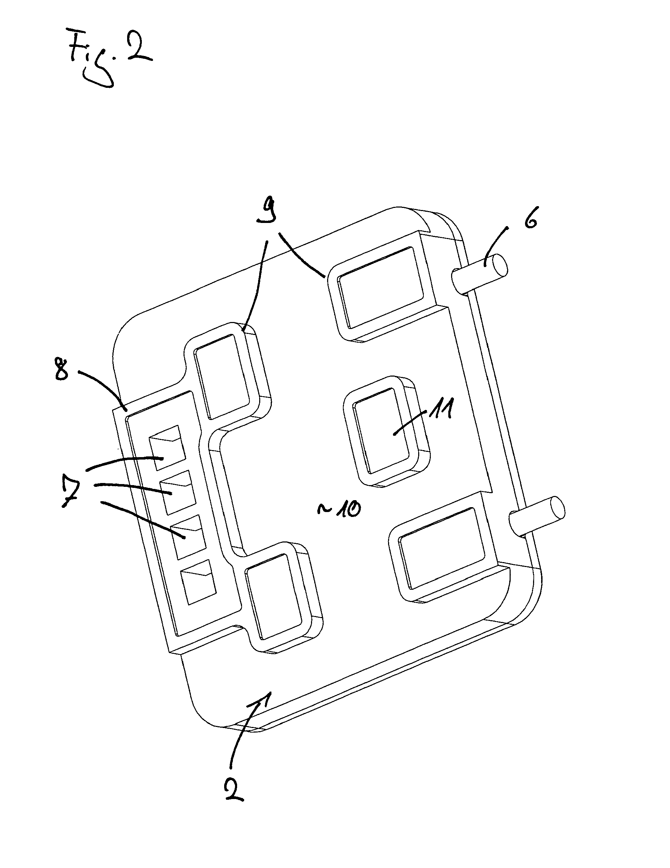

In Fig. 2 ist nun die Unterseite des unteren Gehäuseelements 2 zu sehen. Diese weist Öffnungen 7 auf, durch welche die Stromleiter des Photovoltaikmoduls in die Anschlußdose hineingeführt werden können. Die Öffnungen 7 sind dabei von Klebestegen 8 umgeben, durch welche die Anschlußdose dichtend auf dem Photovoltaikmodul aufklebbar ist. Die Anschlußdose wird jedoch nicht vollflächig mit dem Photovoltaikmodul verklebt, sondern weist Abstandsstege 9 auf, welche aus der Unterseite 10 des Gehäuses herausragen. Diese Abstandsstege bilden Klebebereiche, mit denen die Anschlußdose auf dem Photovoltaikmodul aufgeklebt wird, während der zurückgesetzte Bereich der Unterseite 10 eine Luftzirkulation zwischen der Unterseite der Anschlußdose und dem Photovoltaikmodul erlaubt. Dabei sind mehrere als Abstandsstege ausgeführte Klebebereiche vorgesehen, welche so angeordnet sind, daß die Anschlußdose zumindest in einer Richtung durchgehend unterströmt werden kann.

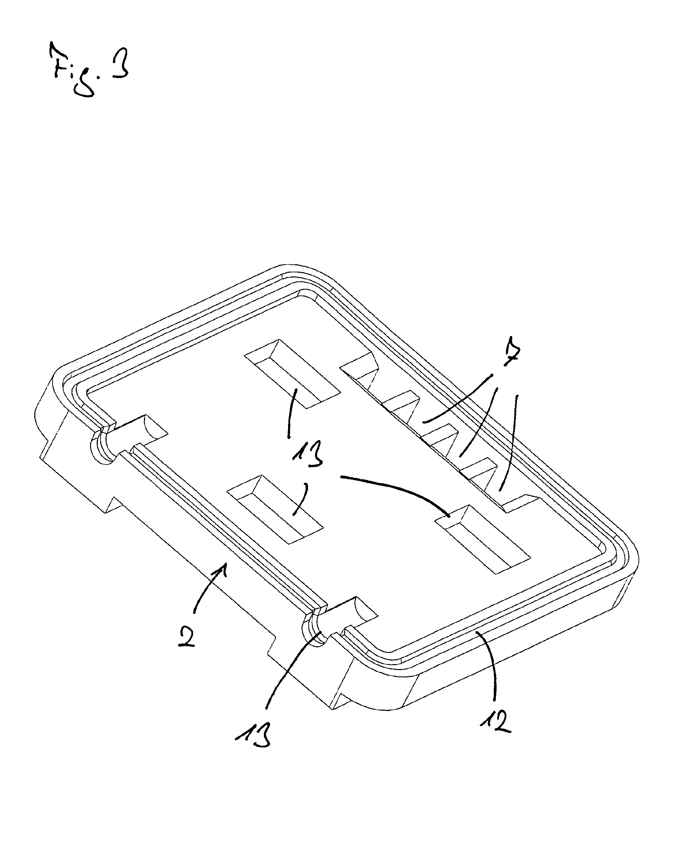

In Fig. 3 ist die Oberseite des unteren Gehäuseelements 2 zu erkennen. Hier sind wiederum die Öffnungen 7 gezeigt, durch welche die Stromleiter des Photovoltaikmoduls in die Anschlußdose geführt werden. Zwischen den einzelnen Öffnungen 7 sind dabei Stege vorgesehen, welche die Stromleiter des Photovoltaikmoduls innerhalb der Anschlußdose gegeneinander isolieren.

Das untere Gehäuseelement 2 weist weiterhin einen umlaufenden Dichtbereich 12 auf, in welchem beispielsweise eine Gummidichtung angeordnet werden kann, um das obere und das untere Gehäuseelement dichtend miteinander zu verbinden. Die Verbindung der beiden Gehäuseelemente erfolgt dabei durch Verkleben, wofür entlang des Dichtbereichs Klebestege zum Aufkleben des oberen Gehäuseelements vorgesehen sind.

Weiterhin sind in einem Randbereich des unteren Gehäuseelements Kabeldurchführungsvertiefungen 13 vorgesehen, durch welche die Kabel des Kabelsatzes nach außen geführt werden können. Weiterhin sind auf der Oberseite des unteren Gehäuseelements 2 Vertiefungen 13 vorgesehen, in welche wie unten noch näher erläutert wird, Dioden versenkt angeordnet werden. Das Gehäuse bildet hierdurch Trennbereiche zwischen den Dioden, um diese thermisch voneinander zu isolieren.

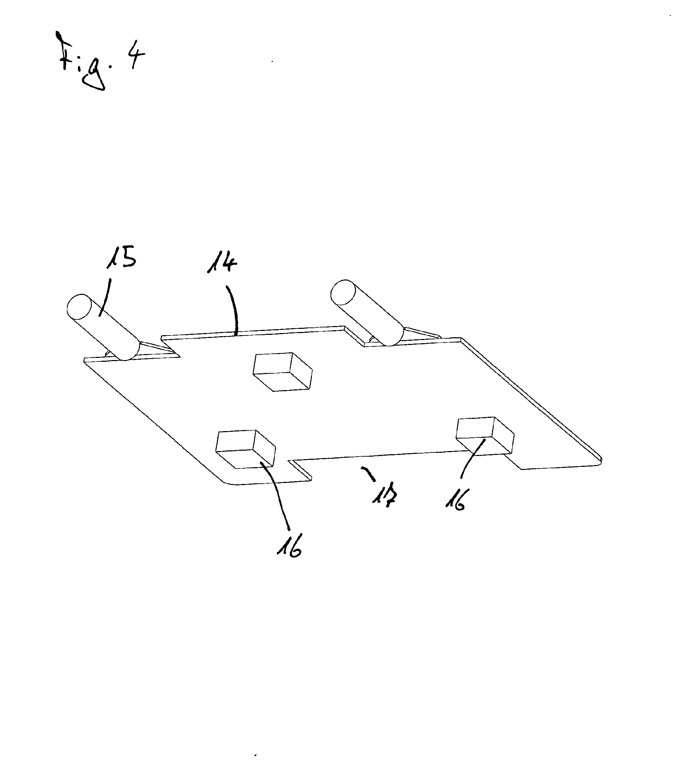

In Fig. 4 ist eine Leiterplatte gezeigt, welche in das Gehäuse eingelegt wird und welche die elektrischen Verbindungen und Elemente innerhalb des Gehäuses trägt. An der Leiterplatte 14 sind die Kabelanschlüsse 15 des Kabelsatzes 6 so angeordnet, daß beim Einlegen der Leiterplatte 14 in das untere Gehäuseelement die Kabelanschlüsse 15 durch die Kabeldurchführung 13 nach außen geführt werden. Weiterhin ist ein Verbindungsbereich 17 zur Verbindung mit den durch die Öffnung 7 in das Gehäuse geführten Stromleitern des Photovoltaikmoduls vorgesehen.

Weiterhin sind auf der Leiterplatte 14 Bypass-Dioden 16 angeordnet. Diese Bypass-Dioden überbrücken Zellenreihen des Moduls, um seine Funktion bei Teilbeschattung zu erhalten. Bei längerer Beschattung einer Solarzelle verstopft sie und die anderen Zellen versuchen weiterhin, ihren Nennstrom durch sie hindurchzuführen. Dabei kann es vorkommen, daß die verstopfte Zelle ihre Sperrspannung der treibenden Spannung der anderen Zellen entgegenstellt und es würde ohne die Bypass-Dioden zu einer Überhitzung kommen. Die Bypass-Dioden überbrücken nun die verschattete Zelle, die verschattete Zellenreihe oder das verschattete Modul und schützen somit die Anlage vor Überhitzung.

Allerdings werden bei der Umleitung des Stromes die Dioden selbst warm bis heiß, so daß eine entsprechende Isolation gegenüber dem Photovoltaikmodul vorgesehen sein muß. Diese wird nun durch das erfindungsgemäß verwendete Keramikmaterial sowie durch die nur relativ kleine Auflagefläche der Dose auf dem Photovoltaikmodul gewährleistet. Weiterhin sind die Dioden 16 innerhalb der Dose durch Keramikbereiche voneinander getrennt, und hierdurch thermisch isoliert, indem sie in den Vertiefungen 13 des unteren Gehäuseelements 2 versenkt angeordnet sind. Unterhalb der Vertiefungen sind dabei auf der Unterseite des unteren Gehäuseelements ringförmig die Vertiefungen umgebende Abstandsstege angeordnet, über welche das Gehäuseelement mit dem Photovoltaikmodul verklebt wird.

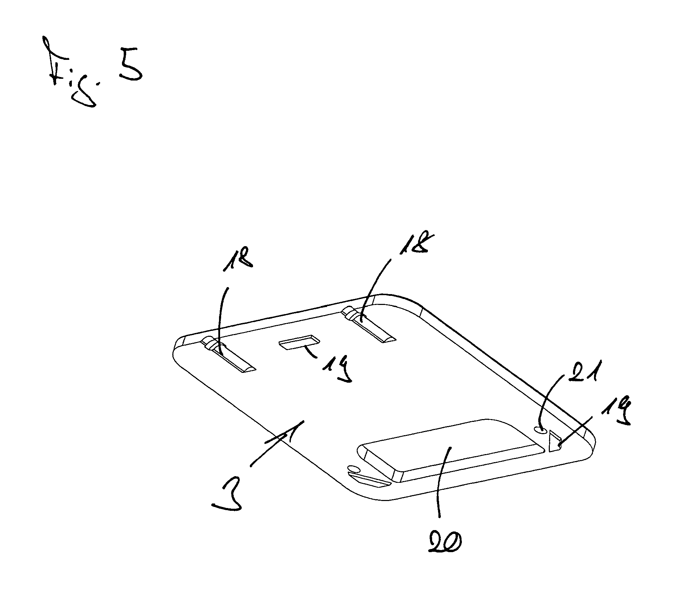

In Fig. 5 ist das obere Gehäuseelement in einer Ansicht von unten dargestellt. Das obere Gehäuseelement weist im Bereich der Kabeldurchführung ebenfalls Vertiefungen 18 auf, durch welche die Kabel nach außen geführt werden. Weiterhin sind Vorsprünge 19 an dem oberen Gehäuseelement vorgesehen, welche in Vertiefungen am unteren Gehäuseelement eingreifen und so das obere Gehäuseelement in der korrekten Position auf dem unteren Gehäuseelement positionieren. Weiterhin ist die Lötöffnung 20 gezeigt, durch welche hindurch die Stromleiter des Photovoltaikmoduls auf die Leiterplatte 14 innerhalb des Gehäuses gelötet werden können.

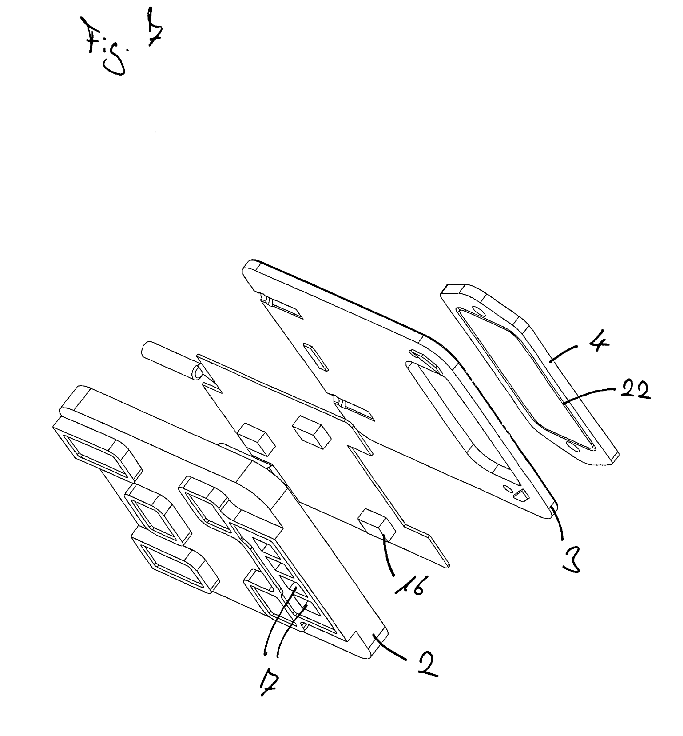

Die Lötöffnung 20 wird nach dem Anschluß der Stromleiter dann durch den Deckel 4 verschlossen. Hierfür sind im Deckel 4 Schraublöcher und im oberen Gehäuseelement 3 Gewindelöcher 21 vorgesehen, so daß der Deckel 4 mit dem Gehäuse verschraubt werden kann. Die Gewindestege sind dabei direkt in das Keramikmaterial eingearbeitet. Der Deckel 4 weist auf seiner Unterseite einen umlaufenden Dichtbereich 22 auf, welcher in Fig. 7 zu erkennen ist. In diesem kann beispielsweise eine umlaufende Gummidichtung vorgesehen sein, durch welche das Gehäuse dicht verschlossen werden kann.

Der gesamte Aufbau der erfindungsgemäßen Anschlußdose ist nochmals in den Explosionszeichnungen 6 und 7 zu erkennen. Zwischen dem unteren Gehäuseelement 2 und dem oberen Gehäuseelement 3 ist die Leiterplatte 14 angeordnet, an welcher die Anschlußstellen für die Stromleiter des Photovoltaikmoduls, die Bypass-Dioden 16 sowie die Kabelanschlüsse des Kabelsatzes angeordnet sind. Das untere und das obere Gehäuseelement sind dabei ringsum dichtend miteinander verklebt und werden vormontiert geliefert.

Die Anschlußdose wird dann über die Klebebereiche 8 und 9 auf ihrer Unterseite mit dem Photovoltaikmodul so verklebt, daß die Stromleiter aus dem Photovoltaikmodul durch die Öffnungen 7 in das Innere des Gehäuses geführt sind, wo die durch die Lötöffnung hindurch mit den Anschlußstellen auf der Leiterplatte verbunden werden. Die Lötöffnung 20 wird dann nach erfolgter Montage durch den Deckel 4 verschlossen. Durch den verschraubbaren Deckel 4 sind die Anschlußstellen auch im Nachhinein z.B. zu Wartungszwecken noch zugänglich.

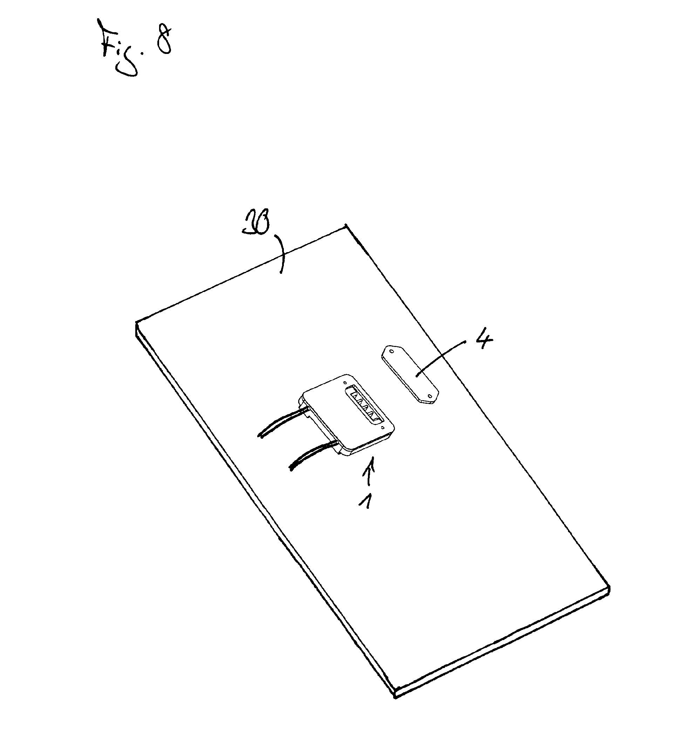

In Fig.8 ist ein Ausführungsbeispiel eines Photovoltaikmodul 30 mit einer erfindungsgemäßen Anschlußdose 1 gezeigt. Die Anschlußdose ist auf der Unterseite des Photovoltaikmoduls aufgeklebt und dient dem Anschluß des Photovoltaikmoduls über den Kabelsatz sowie der Überbrückung bei Beschattung.

Durch die vorliegende Erfindung wird eine Anschlußdose zur Verfügung gestellt, welche durch die perfekten Isolationseigenschaften und die Hitzebeständigkeit der für das Gehäuse eingesetzten Keramik einen jahrelangen problemlosen Einsatz auch bei härtesten Bedingungen im Außenbereich erlaubt. Zudem wird die Wärmeübertragung auf das Photovoltaikmodul minimiert, so daß Leistungsverluste durch eine Erwärmung des Wavers verringert werden. Die Anschlußdose ist dabei einfach herzustellen, zu montieren und zu warten.

## Patentansprüche

1. Anschlußdose für ein Photovoltaik-Modul zur Verbindung der Stromleiter des Photovoltaik-Moduls mit einem Kabelsatz, wobei die Anschlußdose ein Gehäuse aufweist, in welches die Stromleiter des Photovoltaikmoduls einführbar sind und aus welchem der Kabelsatz herausführbar ist,
**dadurch gekennzeichnet,**
**daß** das Gehäuse aus Keramik gefertigt ist.

2. Anschlußdose nach Anspruch 1, wobei das Gehäuse aus Silikat-Keramik gefertigt ist, insbesondere aus den Materialien C110, C120, C130, C 220, C221, C 410, C 610, C 780.

3. Anschlußdose nach Anspruch 1 oder 2, wobei das Gehäuse auf seiner Unterseite Öffnungen aufweist, durch welche die Stromleiter des Photovoltaik-Moduls in die Anschlußdose einführbar sind, wobei die Öffnungen vorteilhafterweise von Klebebereichen umgeben sind, mittels welchen das Gehäuse dicht auf das Photovoltaik-Modul aufklebbar ist.

4. Anschlußdose nach einem der vorangegangenen Ansprüche, wobei das Gehäuse auf seiner Unterseite Abstandsstege aufweist, mit welchen es auf dem Photovoltaik-Modul verklebt wird, um eine Luftzirkulation zwischen dem Photovoltaik-Modul und der Unterseite des Gehäuses zu ermöglichen.

5. Anschlußdose nach einem der vorangegangenen Ansprüche, wobei im inneren der Anschlußdose Bypass-Dioden anordenbar sind, insbesondere auf einer in dem Gehäuse angeordneten Leiterplatte.

6. Anschlußdose nach Anspruch 5, wobei der aus der Anschlußdose geführte Kabelsatz an der Leiterplatte angeschlossen ist und/oder die Stromleiter des Photovoltaik-Moduls an die Leiterplatte anschließbar sind.

7. Anschlußdose nach Anspruch 5 oder 6, wobei das Gehäuse in seinem Inneren Trennbereiche zwischen den Dioden aufweist, wobei die Trennbereiche die Dioden vorteilhafterweise jeweils ringsum umgeben.

8. Anschlußdose nach einem der vorangegangenen Ansprüche, wobei das Gehäuse einen Deckel umfaßt, welcher dichtend verschraubbar ist, wobei vorteilhafterweise die Gewindestege für die Verschraubung in das Keramikmaterial eingearbeitet sind.

9. Anschlußdose nach Anspruch 8, wobei der Deckel einen Zugang zu den Anschlußstellen für die Stromleiter des Photovoltaik-Moduls ermöglicht.

10. Anschlußdose nach einem der vorangegangenen Ansprüche, wobei das Gehäuse ein unteres und ein oberes Gehäuseelement umfaßt, zwischen welchen der Kabelsatz aus der Dose geführt wird, wobei vorteilhafterweise die Leiterplatte mit dem Kabelsatz zwischen den beiden Gehäuseelementen anordenbar ist und durch Verbinden der beiden Gehäuseelemente dichtend umschlossen ist.

11. Anschlußdose nach Anspruch 10, wobei die beiden Gehäuseelemente verklebt werden.

12. Anschlußdose nach Anspruch 8 und 10, wobei der Deckel an dem oberen Gehäuseelement angeordnet ist.

13. Anschlußdose nach einem der vorangegangenen Ansprüche, mit einem Kabelsatz und/oder einer Leiterplatte und/oder Bypass-Dioden, vorteilhafterweise als vormontierte Einheit.

14. Photovoltaik-Modul mit einer Anschlußdose nach einem der vorangegangenen Ansprüche.

15. Photovoltaik-Modul nach Anspruch 14, wobei die Anschlußdose auf der Rückseite des Photovoltaik-Moduls, insbesondere auf der Rückseite des Wavers, aufgeklebt ist und die Stromleiter des Photovoltaik-Moduls mit einem Kabelsatz verbindet.
